# FASCICULE DE BREVET EUROPEEN

(11) **EP 2 493 783 B1**
(45) Date de publication et mention de la délivrance du brevet: **10.04.2019**
(21) Numéro de dépôt: 09768539.0
(22) Date de dépôt: 30.10.2009
(51) Int. Cl.: B65F 1/00

(54) **PLATE-FORME MODULAIRE DEMONTABLE POUR DECHETTERIE**
ZERLEGBARE MODULARE PLATTFORM FÜR ABFALLENTSORGUNGSANLAGE
DISMOUNTABLE MODULAR PLATFORM FOR WASTE DISPOSAL FACILITY

(43) Date de publication de la demande: 05.09.2012
(73) Titulaire: Modulo Beton, 31620 Villeneuve-lès-Bouloc (FR)
(72) Inventeur: PEGOT-OGIER, Jean-Jacques, F-82000 Montauban (FR); BOSIO, Michel-Jean, F-82000 Montauban (FR)
(74) Mandataire: Cabinet Morelle & Bardou SC
(86) Numéro de dépôt international: PCT/FR2009/052100
(87) Numéro de publication internationale: WO 2011/051573

(56) Documents cités:
- EP-A1- 1 561 708
- FR-A1- 2 689 916
- FR-A1- 2 899 212

## Description

La présente invention se rapporte au domaine des installations destinées à la collecte des déchets, et plus particulièrement aux installations de déchargement des véhicules transportant des déchets.

Elle a pour objet un dispositif destiné au déchargement de déchets constitué d'une plate-forme surélevée et de rampes d'accès inclinées selon le préambule de la revendication 1.

Les réglementations française et européenne, de plus en plus précises, obligent les collectivités locales à prévoir des sites de collecte des déchets, et notamment des décharges où les particuliers peuvent se débarrasser des déchets qui ne sont pas pris en charge par les éboueurs. Des circulaires ministérielles sont venues renforcer la vigilance pour une application stricte des règles de fonctionnement des déchetteries, leur bonne image de marque vis-à-vis du grand public étant vivement souhaitée.

Pour répondre à ces obligations, certaines collectivités consentent des investissements lourds pour réaliser des centres de collecte de grande capacité. Il s'agit en général d'équipements consistant en une plate-forme équipée de rampes inclinées permettant l'accès de véhicules de tonnage variable à des bennes de collecte placées en contrebas. Cependant, du fait de l'évolution rapide des zones urbanisées et des modifications de l'intercommunalité, il est souvent difficile de prévoir les besoins à long terme. La recherche de terrains appropriés est souvent délicate, et un choix opportun à un moment donné peut s'avérer inadapté un peu plus tard.

Pour permettre une installation provisoire sur des terrains de géométrie variable, un équipement modulaire est proposé, consistant en une plate-forme équipée de rampes inclinées, constituée d'éléments en béton s'assemblant en nombre variable selon la configuration souhaitée.

Le document FR-A-2 706 791 décrit quant à lui une installation réalisée également à l'aide d'éléments modulaires. Des bennes disposées les unes contre les autres, sont dotées au niveau de leur bord supérieur d'un plancher porteur qui constitue un tablier unique pouvant supporter le véhicule dont le contenu doit être déchargé.

Le document FR-A-2 687 939 décrit lui aussi une installation de récolte et de tri des déchets comprenant une pluralité d'éléments modulaires permettant la réalisation d'une plate-forme surélevée par rapport au sol, accessibles par une rampe d'accès, les bennes étant là aussi réparties en contrebas, le long de plusieurs bords de ladite plate-forme. Cette structure nécessite l'édification de piliers destinés à surélever l'ensemble. Contraignants à agencer et à articuler avec les plaques de la plate-forme, ces piliers constituent un point de fragilité due à la concentration des poids sur une surface limitée et ralentissent la construction de l'installation. Ils impliquent incidemment la construction de fondations au sol pour maintenir la stabilité desdits piliers et donc de l'ensemble de la structure.

De ce fait, la structure n'est pas entièrement démontable, les piliers restant scellés sur leur fondation.

Le document EP-A-1 561 708 décrit un dispositif modulaire et démontable destiné au déchargement de déchets, selon le préambule de la revendication 1, constitué d'une plate-forme surélevée, de rampes d'accès inclinées et comprenant une pluralité de plaques juxtaposées formant une dalle de répartition.

Ces dispositifs réalisés en tôle d'acier ou d'aluminium ont en outre une résistance limitée aux contraintes physiques, notamment aux charges élevées qu'elles ont vocation à supporter, et aux chocs durant les manoeuvres des véhicules. Les agressions chimiques peuvent également les détériorer, que ce soit du fait de déchets corrosifs ou des intempéries. Aucune protection particulière n'est envisagée en cas de conditions climatiques extrêmes (fortes chaleurs ou gel rendant la plate-forme impraticable). Les déformations provoquées à la longue par leur usage empêchent le plus souvent leur réutilisation sur un autre site après démontage. En outre, la surface de plain-pied, sous la plate-forme de ces structures n'est pas fermée et reste totalement inexploitée.

La présente invention a pour objectif de remédier à ces inconvénients. Elle consiste en un équipement modulaire destiné à la collecte de déchets. Plus précisément, l'invention concerne un dispositif destiné au déchargement de déchets constitué d'une plate-forme surélevée et de rampes d'accès inclinées, des bennes servant de réceptacles aux déchets pouvant être posées sur le sol en jouxtant la plate-forme surélevée, comprenant :
- une pluralité d'éléments portants juxtaposés formant un plan horizontal surélevé, lesdits éléments portants étant constitués de deux montants verticaux destinés à prendre appui sur une surface et d'une traverse supérieure horizontale,
- une pluralité d'éléments d'accès formant au moins un plan incliné continu depuis la surface d'appui jusqu'au plan horizontal surélevé, lesdits éléments d'accès étant constitués de deux montants verticaux prenant appui sur la surface d'appui et d'une traverse supérieure inclinée, et
- des moyens de fixation entre les éléments portants et les éléments d'accès, les éléments portants et les éléments d'accès constituant des éléments modulaires présentant une forme en U inversé, les branches du U donnant la largeur de l'élément modulaire considéré.

Selon l'invention des moyens de passage à un ou plusieurs battants articulés permettant l'accès dans la zone de plain-pied avec le sol située sous la plate-forme et préalablement cloisonnée sont disposés au niveau d'au moins un élément modulaire.

Un tel dispositif est particulièrement adapté et facile à réaliser sur une surface aux propriétés de résistance mécanique adéquates à partir d'éléments modulaires portants et d'éléments modulaires d'accès préfabriqués en béton.

Les avantages d'une plate-forme sont nombreux :
- forme modulable en fonction de la capacité souhaitée et de la géométrie du terrain,
- rapidité de construction par simple juxtaposition des modules préfabriqués en usine, sans fabrication de pilier, ni fondation,
- installation sur toutes les surfaces présentant les caractéristiques de résistance mécanique identifiées,
- création de zones de stockage de plain-pied sous le plan horizontal de la plate-forme,
- nettoyage facile,
- solidité à toute épreuve,
- entièrement démontable et remontable sans dégradation,
- transportable,
- peu onéreux.

De manière surprenante, le demandeur a imaginé après plusieurs essais, contrairement à un a priori de l'Homme du métier, qu'il était en effet possible de se passer de la réalisation préalable d'une dalle, formée par exemple de plaques juxtaposées, et dont la fonction est usuellement indispensable pour fournir une surface plane, horizontale et stable, sur laquelle pourront prendre appui les éléments portants et les éléments d'accès. Il est ainsi bien connu dans la pratique de la réalisation de structures en éléments modulaires qu'une telle dalle doit présenter une emprise au sol au moins aussi importante que la plate-forme qu'elle supporte pour assurer la solidité et la stabilité de l'ensemble. De telles dalles sont d'ordinaire également utilisées pour supporter des bennes de collecte des déchets. La planéité et la stabilité de la dalle semblait donc indispensable à la cohésion du dispositif dans son ensemble et représentait une étape incontournable, bien que contraignante en terme de temps et de moyens dans la réalisation de ce genre de structure.

Allant au-delà de cet a priori, les éléments portants juxtaposés sont ainsi en appui sur une simple surface d'appui formant un plan continu horizontal surélevé apte à recevoir des véhicules. L'étape de réalisation préalable d'une dalle est donc supprimée. Le problème de l'assise au sol de la structure résolu dans les systèmes de construction classiques par une dalle rigide est ici surmonté par les propriétés de résistance de la surface d'appui, générant à la fois un gain en termes de coût et de temps.

Contrairement à ce qui aurait pu être attendu, l'ensemble de la structure n'est pas fragilisé par l'absence de dalle mais est à l'inverse plus résistant, notamment grâce à une certaine souplesse de l'assise au sol autorisant l'ensemble de la structure à bouger, et se dilater dans des proportions infimes et relatives. Ceci permet précisément d'éviter une trop grande rigidité exposant l'ensemble de la structure à des phénomènes de fissuration par le jeu des contraintes s'exerçant entre les montants verticaux et la dalle sur laquelle ils sont en appui dans les constructions classiques. Une meilleure résistance sismique est ainsi obtenue.

La suppression de la dalle présente également un avantage en ce qu'elle permet d'obtenir une surface accessible de plain-pied, sans dénivelé dû à l'épaisseur de la dalle. L'accessibilité à la zone située sous la plate-forme est ainsi optimisée comme il sera détaillé ci-après.

On comprend aisément que pour un dispositif donné, les montants verticaux des éléments portants présentent une arrête supérieure horizontale et ont tous la même hauteur. En général, on choisira une hauteur comparable à la hauteur des bennes placées à la périphérie du dispositif, d'un modèle habituellement employé pour la collecte des déchets.

Par surface d'appui on entend tout type de surface susceptible de permettre la construction de structures, notamment en béton, destinées à recevoir des véhicules de poids pouvant aller jusqu'à plusieurs tonnes. Le type de surface peut comprendre, à titre indicatif mais non limitatif, un enrobé du type béton bitumineux, un empierrement ou un radier en béton pouvant supporter plus de 0,22 MPa.

On comprend également que pour un dispositif donné les montants verticaux des éléments d'accès présentent une arête supérieure inclinée et ont des hauteurs variables permettant d'assurer une élévation progressive et continue depuis le niveau du sol jusqu'au niveau de la plate-forme.

Le principe de base du dispositif étant la modularité, il est vivement recommandé que chaque type d'éléments modulaires constituant la structure du dispositif (éléments modulaires portants, éléments modulaires d'accès) soit réalisé en un nombre limité de formats, de préférence en un format unique, ledit format constituant l'unité du module. Les dimensions de ces éléments varieront de préférence dans la limite de modules présentant une hauteur inférieure à 4 mètres, une longueur inférieure à 10 mètres et une largeur inférieure à 6 mètres. Toutes les déclinaisons étant possibles dans la gamme des valeurs de ces trois dimensions ainsi définies.

Pour des raisons de résistance des matériaux il sera avantageux que les montants verticaux soient placés du côté le plus court des éléments portants ou des éléments d'accès. En coupe transversale, lesdits éléments portants et d'accès constituent des éléments modulaires présentant une forme en U inversé, les branches du U donnant la largeur de l'élément modulaire considéré. Lors de l'assemblage du dispositif on disposera de manière avantageuse les éléments modulaires dans le même sens. On pourra par exemple disposer une rangée d'éléments alignés dans le sens de la longueur. Ces éléments, en contact par leur face en U, seront appelés "éléments consécutifs". On pourra aussi disposer une rangée d'éléments alignés dans le sens de la largeur. Ces éléments, en contact par la surface de leur montant vertical, seront appelés " éléments accolés". Bien entendu, dans le cas le plus général et selon le principe de la modularité, une plate-forme est composée de plusieurs rangées d'éléments consécutifs et accolés. Ces définitions s'étendent aux éléments de format carré, rectangulaire ou triangulaire. Les calculs de résistance des éléments modulaires s'appliquent sans difficulté pour établir les dimensions optimales et limites des éléments constitutifs du dispositif dans le cadre fixé par la présente invention.

Contre toute attente en l'absence d'une dalle de répartition, le dispositif est caractérisé par sa stabilité et sa solidité, non seulement de par les caractéristiques propres des éléments modulaires le composant, mais également du fait de moyens de fixation apportant cohésion entre les éléments portants et les éléments d'accès. Ces moyens de fixation des éléments consécutifs entre eux, font appel à des pièces supplémentaires.

De manière surprenante, le demandeur a constaté, grâce à la forme spécifique en U renversé des éléments modulaires utilisés et par leur agencement, qu'il n'était plus nécessaire de recourir à la réalisation préalable d'une dalle de répartition préfabriquée sensée stabiliser l'ensemble de la structure lorsque la surface d'appui présentait les caractéristiques de résistance mécanique suffisantes.

La forme des éléments modulaires utilisés pour la fabrication d'une plate-forme pour dé-chetterie présente également l'avantage de ménager sous la plate-forme un espace fermé constitué d'autant de « tunnels » que la plate-forme compte de rangées d'éléments modulaires. La zone de plain-pied est aisément refermée par le cloisonnement des faces extérieures frontales avant et arrière de la structure au moyen de parois rigides.

Selon l'invention, on prendra soin de disposer au niveau d'au moins un élément modulaire permettant l'accès dans la zone de plain-pied, des moyens de passage à un ou plusieurs battants articulés. De préférence ces moyens de passages seront constitués par tout type de porte susceptible d'être fermée de manière sécurisée ou non. Des moyens de passages pourront également être introduits pour permettre la communication, sous le plan horizontal de la plate-forme, entre plusieurs rangées d'éléments modulaires.

Pour renforcer la solidité et la cohésion du dispositif selon l'invention, des moyens de fixation peuvent être mis en oeuvre. Cette fixation peut être basée sur le principe du chaînage.

Par exemple, lesdits moyens de fixation peuvent comprendre au moins un système composé de deux pattes rigides fixées entre elles à leurs extrémités par deux tiges filetées traversant chacune un montant vertical desdits deux éléments consécutifs. Ainsi, lesdites pattes rigides sont placées de part et d'autre des montants verticaux et à cheval sur deux montants verticaux consécutifs. Le tout est maintenu serré par des boulons vissés sur le filetage desdites tiges.

Il peut être prévu également d'assurer la cohésion par fixation de quatre éléments entre eux, à savoir une première paire d'éléments consécutifs accolée à une seconde paire d'éléments consécutifs.

Par exemple, lesdits moyens de fixation comprennent au moins un système composé de deux pattes rigides fixées entre elles à leurs extrémités par deux tiges filetées traversant chacune deux montants verticaux accolés de deux paires d'éléments consécutifs. Le tout est maintenu serré par des boulons vissés sur le filetage desdites tiges.

Dans un souci d'optimisation du dispositif et compte tenu de l'intérêt d'avoir de nombreux éléments de symétrie pour augmenter la souplesse de combinaison des éléments modulaires, et assurer une bonne cohésion de l'ensemble, le dispositif peut être composé d'éléments de même largeur.

Pour des raisons de sécurité des véhicules et des personnes, un garde-corps peut être installé sur le pourtour de la plate-forme. Dans ce but, les éléments portants et d'accès comportent des moyens de fixation d'un garde-corps, pouvant consister par exemple en des trous ou chevillages dans lesquels peuvent être fixées des balustrades. Les gardes-corps peuvent également être positionnés sur des chasses-roues disposés au pourtour de la plate-forme, ces dits chasse-roues permettent de sécuriser la plate-forme contre la chute des véhicules.

Tout matériau résistant et indéformable peut être employé pour réaliser les modules composant le présent dispositif. De manière avantageuse les éléments portants et les éléments d'accès sont préfabriqués en béton. Ce matériau présente en effet l'avantage de conférer des propriétés de stabilité et coupe-feu à l'ensemble de la structure. De cette manière, la zone de plain-pied répond notamment aux normes de sécurité, ce qui permet de bénéficier d'un espace clos pouvant servir à diverses applications, et en particulier de lieu de stockage pour différents produits.

Dans un mode particulier de réalisation de l'invention, il est prévu d'incorporer dans au moins une traverse supérieure horizontale des éléments modulaires des moyens de chauffage de la plate-forme. Ces moyens seront particulièrement utiles en cas de conditions climatiques défavorables et notamment en cas de gel. De manière préférée, il s'agira de résistances électriques noyées dans les plaques de béton et alimentées par tout type de source d'énergie. Elles seront disposées de préférence au niveau des plaques supérieures des éléments modulaires portants formant la surface plane de la plate-forme.

Il est également possible d'imprimer des motifs anti-dérapant au niveau des traverses supérieures horizontales des éléments modulaires afin de prévenir toute chute de personne ou dérapage de véhicule.

Avantageusement, des joints d'étanchéité pourront être placés à la surface des éléments portants et des éléments d'accès, au niveau des juxtapositions de chaque élément modulaire. La surface plane de la plate-forme sera alors légèrement en pente (de l'ordre d'un centimètre par mètre) afin de permettre l'écoulement des eaux de pluies à l'extérieur de la plate-forme.

De la même manière, des bandes de compression en matériau résiliant du type élastomère ou caoutchouc pourront aussi être placées entre les parois des éléments modulaires, au niveau des zones de contact des montants verticaux afin d'améliorer la cohésion et l'isolation de l'ensemble de la structure. Ces bandes pourront également être utilisées au niveau de la zone de contact entre les montants verticaux des éléments modulaires et la surface d'appui, facilitant encore les possibilités de dilatation de la structure, tout en uniformisant la zone de contact.

Le dispositif est conçu pour le déchargement d'objets ou de matières à partir de la plate-forme dans des bennes posées en contrebas. La collecte de déchets apportés par des véhicules en est l'application principale. Cependant tout autre emploi nécessitant qu'un véhicule se place en surplomb par rapport à un réceptacle quelconque est également possible.

D'autres particularités et avantages du dispositif seront mieux compris à l'aide de la description et des dessins donnés à titre d'exemples non limitatifs ci-après.
La figure 1 représente une vue générale d'un dispositif de déchargement de déchets.
Les figures 2-a, 2-b et 2-c illustrent en vue de dessus, trois configurations différentes d'un dispositif de déchargement comprenant une plate-forme et une ou deux rampes d'accès.
La figure 3 est une coupe longitudinale d'une rampe d'accès à une plate-forme.
La figure 4-a est une vue en coupe horizontale de quatre éléments portants, disposés en deux paires accolées d'éléments consécutifs.

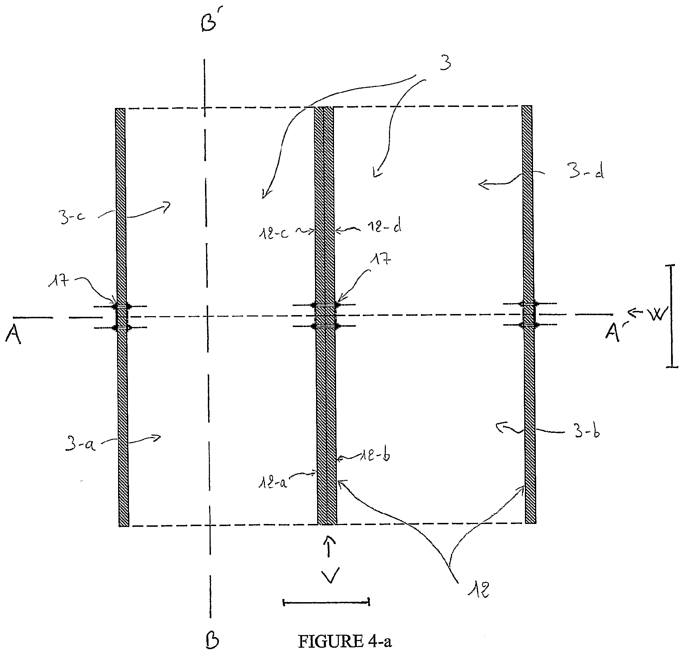

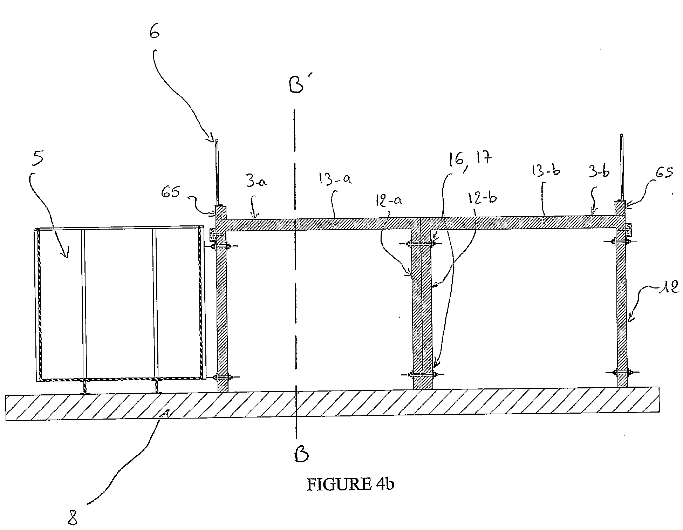

La figure 4-b est une coupe transversale de la figure 4-a selon un axe A-A', représentant une benne accolée à la plate-forme et des garde-corps fixés à l'aplomb des montants verticaux.

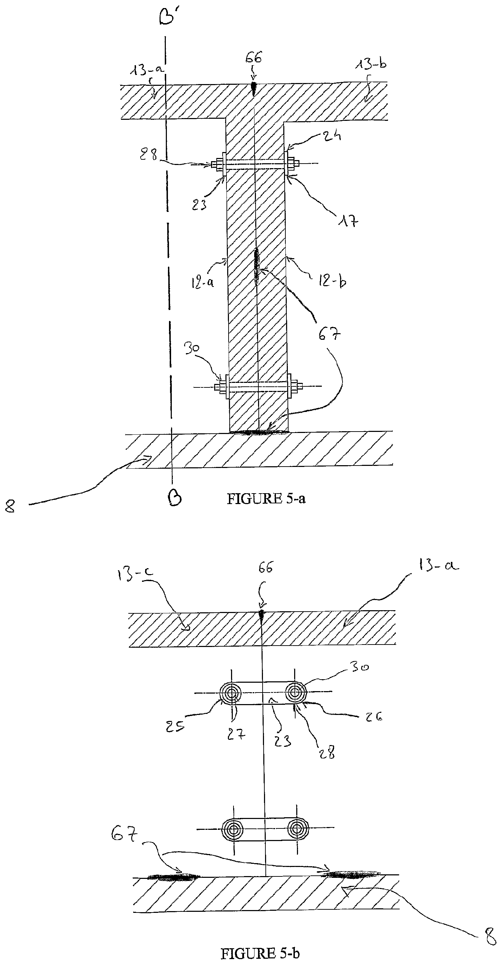

La figure 5-a est une vue agrandie de la coupe transversale de la figure 4-a selon un axe A-A', en regard de la zone V, illustrant en détail une jonction entre deux éléments portants et la surface d'appui.
La figure 5-b est une vue agrandie d'une coupe B-B' de la figure 4-a en regard de la zone W, illustrant en détail une jonction entre deux éléments portants et la surface d'appui.

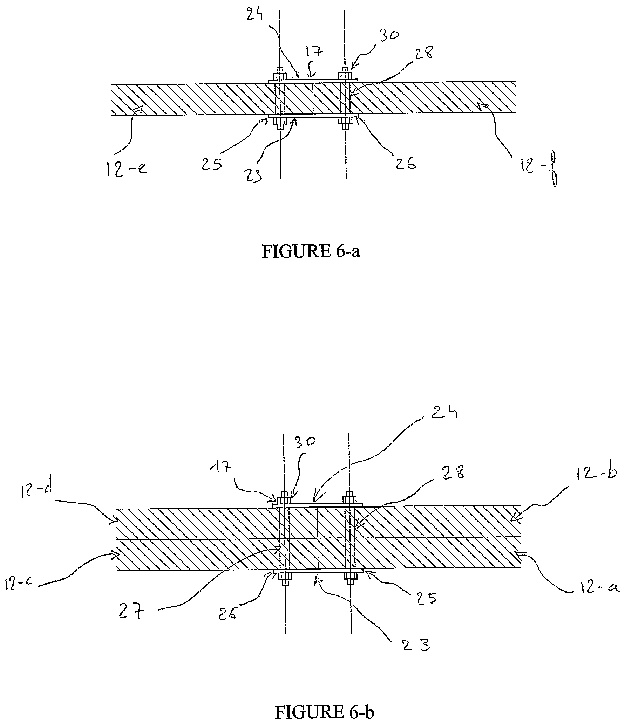

La figure 6-a représente en coupe horizontale un détail du système de fixation de deux éléments portants.
La figure 6-b représente en coupe horizontale un détail du système de fixation de quatre éléments portants.

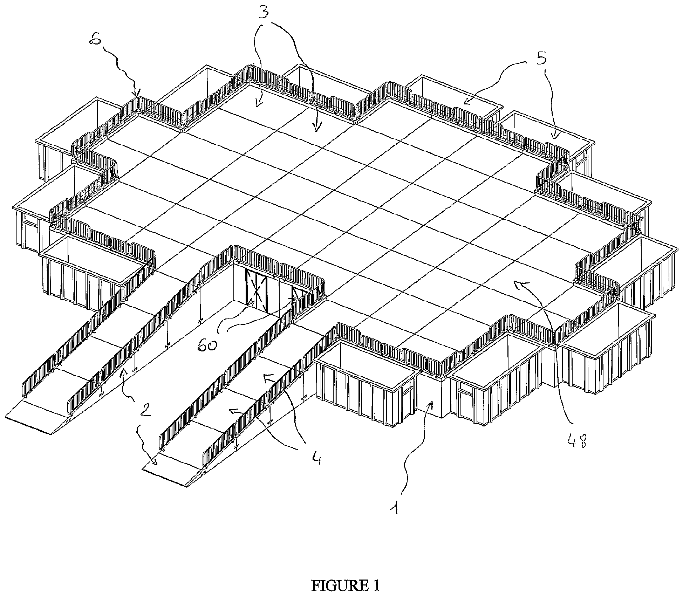

La figure 1 présente une vue en trois dimensions d'une plate-forme 1 de déchargement accessible par deux rampes d'accès 2 et équipée d'un garde-corps 6. La plate-forme surélevée 1 est accessible par deux rampes d'accès inclinées 2. Des bennes 5 servant de réceptacles aux déchets sont posées sur le sol et jouxtent la plate-forme 1 en divers endroits. La plate-forme est composée de 54 éléments portants 3 formant le plan horizontal 48. Chaque rampe 2 est composée de cinq éléments d'accès 4. Un garde-corps 6 est installé sur le pourtour de la plate-forme, il s'interrompt au niveau des bennes 5 pour permettre l'approche des véhicules et le déchargement des déchets. Des garde-corps ouvrant à la française peuvent être installés devant les bennes pour la sécurité des utilisateurs.

Selon l'invention, des moyens de passage représentés par des portes à double battant 60 permettent d'accéder au niveau de la zone de plain pied avec le sol située sous la plate-forme.

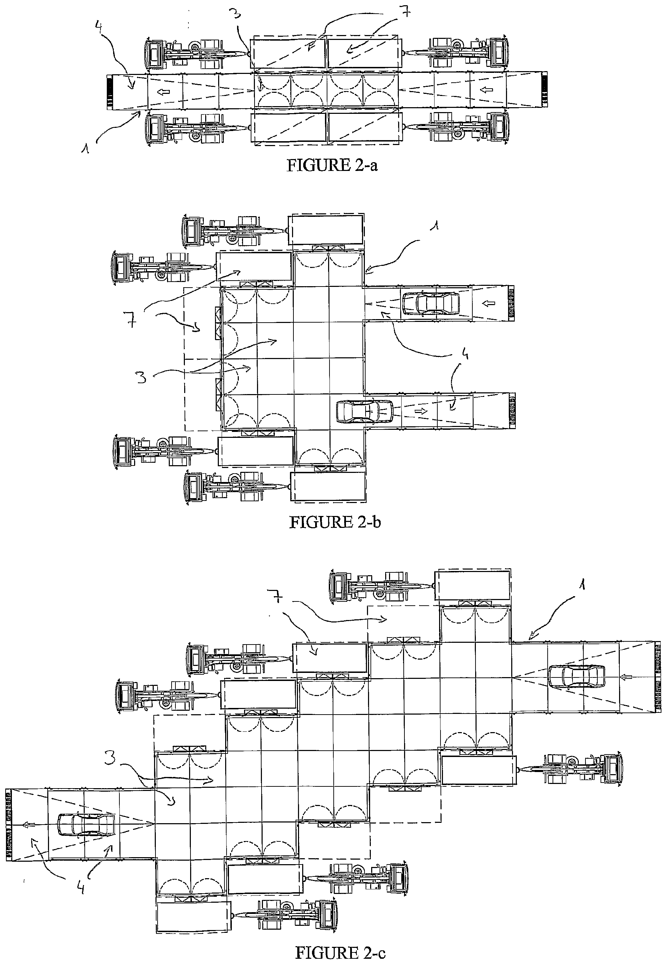

Les figures 2-a, 2-b et 2-c représentent en vue de dessus, trois configurations différentes du dispositif de déchargement. Les emplacements prévus pour les bennes de collecte 5 sont matérialisés par les zones marquées au sol et prévues à cet effet 7.

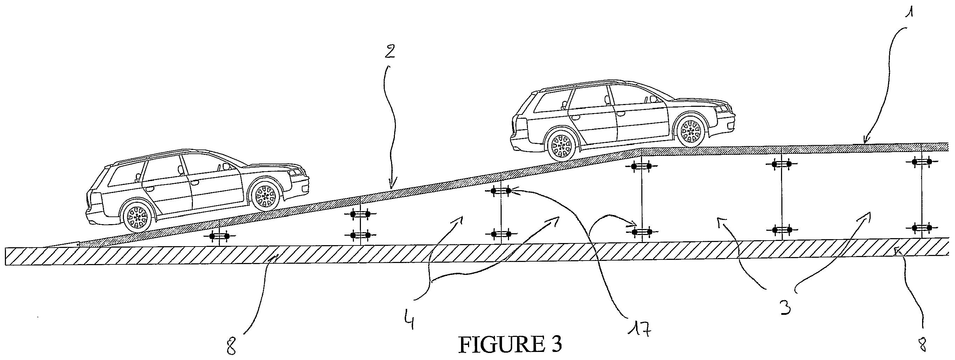

Sur la figure 3, est représentée en coupe longitudinale, une rampe 2 composée de plusieurs éléments d'accès 4, se prolongeant par une succession d'éléments portants 3 de la plate-forme 1. Les éléments d'accès 4 et les éléments portants 3 prennent appui sur la surface d'appui 8. Les systèmes de fixation 17 sont placés à la jonction des différents éléments 3, 4.

Sur la figure 4-a apparaissent en coupe horizontale, quatre éléments portants 3, disposés en deux paires accolées d'éléments consécutifs. Les éléments portants 3 sont constitués chacun de deux montants verticaux 12 et d'une traverse supérieure horizontale 13. Les éléments 3-a et 3-b sont accolés par la surface d'un montant vertical, respectivement 12-a et 12-b, de même que les éléments 3-c et 3-d sont accolés par la surface d'un montant vertical, respectivement 12-c et 12-d. D'autre part, les éléments 3-a et 3-c sont consécutifs, de même que les éléments 3-b et 3-d. La jonction des quatre éléments portants 3 est assurée par le système de fixation 17. Ces éléments portants prennent appui totalement sur la surface d'appui 8.

La figure 4-b représente deux éléments portants 3 accolés, en coupe transversale selon l'axe A-A' en regard de la zone V. Les éléments portants 3-a et 3-b sont constitués chacun de deux montants verticaux 12 prenant appui sur la surface d'appui 8, et d'une traverse supérieure horizontale 13. Les montants verticaux 12-a et 12-b sont en contact, de sorte que les traverses 13-a et 13-b des éléments portants 3-a et 3-b forment un plan horizontal surélevé continu. Des garde-corps 6 sont positionnés sur les éléments portants (3) et d'accès (4), à l'aplomb des montants verticaux extérieurs de la plate-forme, au moyen d'éléments de fixation de type chasse-roue 65. Des moyens de fixation 16 sont utilisés entre les éléments portants 3.
Ces moyens de fixation sont illustrés en détail sur les figures 5-a, 5-b d'une part, et 6-a, 6-b d'autre part.

La figure 5-a illustre en coupe selon l'axe A-A', le détail d'une jonction entre des éléments portants 3 et la surface d'appui 8. La figure 5-b est une coupe de la même jonction selon l'axe B-B' en regard de la zone W. Un joint d'étanchéité 66 a été posé sur la surface supérieure au niveau de la zone de contact entre deux éléments portants 13-a et 13-b. Des bandes de compression en matériau résiliant du type élastomère 67 ont également été placées au niveau des zones de contact entre les montants verticaux 12-a et 12-b entre eux ainsi qu'entre les zones de contact entre les montants verticaux 12-a et 12-b et la surface d'appui 8.

La fixation des quatre éléments portants 3 entre eux est assurée par deux systèmes 17 placés à des hauteurs différentes. Un tel système 17 est représenté figure 6-b. Il est composé de deux pattes rigides 23 et 24 fixées entre elles à leurs extrémités 25 et 26 par deux tiges filetées 27 et 28. La tige 28 traverse les deux montants verticaux accolés 12-a et 12-b des deux éléments accolés 3-a et 3-b. La tige 27 traverse les deux montants verticaux accolés 12-c et 12-d des deux éléments accolés 3-c et 3-d. Des boulons 30 tiennent serrés lesdites tiges et lesdites pattes du système 17.

La figure 6-a représente un système de fixation 17 de deux éléments portants consécutifs 3, cette configuration se rencontrant à la périphérie du dispositif. Deux pattes rigides 23 et 24 sont fixées entre elles à leurs extrémités 25 et 26 par deux tiges filetées 27 et 28. La tige 28 traverse le montant vertical 12-e. La tige 27 traverse le montant vertical 12-f. Des boulons 30 tiennent serrés lesdites tiges et lesdites pattes du système 17.

A titre indicatif, la sollicitation du dispositif est définie par la charge d'exploitation des modules en béton qui le composent. La pression maximale appliquée sur la couche de surface de la plate-forme du dispositif, accessible par des véhicules de 3,5 tonnes sur module de 4 mètres, est de 0,22 MPa.

Cette faible contrainte d'exploitation est très éloignée des sollicitations des structures des chaussées routières dimensionnées sur la base de l'agressivité de l'essieu standard chargé à 13 tonnes et modélisé par la pression de référence du jumelage standard, soit 0,66 MPa.

## Revendications

1. Dispositif destiné au déchargement de déchets constitué d'une plate-forme surélevée (1) et de rampes d'accès inclinées (2), des bennes (5) servant de réceptacles aux déchets pouvant être posées sur le sol en jouxtant la plate-forme surélevée (1), comprenant :
- une pluralité d'éléments portants (3) juxtaposés formant un plan horizontal surélevé (48), lesdits éléments portants étant constitués de deux montants verticaux (12) destinés à prendre appui sur une surface (8) et d'une traverse supérieure (13) horizontale,
- une pluralité d'éléments d'accès (4) formant au moins un plan incliné continu depuis la surface d'appui (8) jusqu'au plan horizontal surélevé (48), lesdits éléments d'accès étant constitués de deux montants verticaux (12) prenant appui sur la surface d'appui (8) et d'une traverse supérieure (13) inclinée, et
- des moyens de fixation (17) entre les éléments portants (3) et les éléments d'accès (4), les éléments portants (3) et les éléments d'accès (4) constituant des éléments modulaires présentant une forme en U inversé, les branches du U donnant la largeur de l'élément modulaire considéré,
**caractérisé en ce que** des moyens de passage (60) à un ou plusieurs battants articulés permettant l'accès dans la zone de plain-pied avec le sol située sous la plate-forme et préalablement cloisonnée sont disposés au niveau d'au moins un élément modulaire.

2. Dispositif selon la revendication 1, ***caractérisé en ce que*** les dimensions des éléments modulaires varient dans la limite de modules présentant une hauteur inférieure à 4 mètres, une longueur inférieure à 10 mètres et une largeur inférieure à 6 mètres.

3. Dispositif selon l'une des revendications précédentes, ***caractérisé en ce qu'il*** comprend des moyens de fixation (16) de deux éléments (3, 4) consécutifs entre eux.

4. Dispositif selon la revendication 3, ***caractérisé en ce que*** les moyens de fixation (16) comprennent au moins un système (17) composé de deux pattes rigides (23, 24) fixées entre elles à leurs extrémités (25, 26) par deux tiges filetées (27, 28) traversant chacune un montant vertical (12) de deux éléments (3, 4) consécutifs.

5. Dispositif selon l'une des revendications précédentes, ***caractérisé en ce qu**'*il comprend des moyens de fixation (16) de quatre éléments (3, 4) entre eux, lesdits éléments étant disposés en une première paire d'éléments consécutifs accolée à une seconde paire d'éléments consécutifs.

6. Dispositif selon la revendication 5, ***caractérisé en ce que*** les moyens de fixation (16) comprennent au moins un système (17) composé de deux pattes rigides (23, 24) fixées entre elles à leurs extrémités (25, 26) par deux tiges filetées (27, 28) traversant chacune deux montants verticaux (12) accolés de deux paires d'éléments (3, 4) consécutifs.

7. Dispositif selon l'une des revendications précédentes, ***caractérisé en ce qu'***il comprend un garde-corps (6) sur le pourtour de la plate-forme.

8. Dispositif selon la revendication 7, ***caractérisé en ce que*** lesdits garde-corps sont positionnés sur les éléments portants (3) et d'accès (4), de préférence à l'aplomb des montants verticaux extérieurs (12) de la plate-forme, par l'intermédiaire d'autres moyens de fixation (65).

9. Dispositif selon l'une quelconque des revendications précédentes, ***caractérisé en ce que*** les éléments portants (3) et les éléments d'accès (4) sont préfabriqués en béton.

10. Dispositif selon la revendication précédente, ***caractérisé en ce qu'***au moins une traverse supérieure horizontale (13) des éléments modulaires comprend des moyens de chauffage de la plate-forme.

11. Dispositif selon l'une quelconque des revendications précédentes, ***caractérisé en ce que*** des joints d'étanchéité (66) sont placés à la surface des éléments portants (3) et d'accès (4), au niveau des juxtapositions de chaque élément modulaire.

12. Dispositif selon l'une quelconque des revendications précédentes, ***caractérisé en ce que*** des bandes de compression (67) en matériau résiliant sont placées entre les parois des éléments modulaires, au niveau des zones de contact des montants verticaux (12).

13. Dispositif selon l'une quelconque des revendications précédentes, ***caractérisé en ce que*** des bandes de compression (67) en matériau résiliant sont placées au niveau de la zone de contact entre les montants verticaux (12) des éléments modulaires et la surface d'appui (8).

## Patentansprüche

1. Vorrichtung zum Entladen von Abfällen, bestehend aus einer erhöhten Plattform (1) und geneigten Zufahrtsrampen (2), wobei Mulden (5), die als Behältnisse für die Abfälle dienen, am Boden angrenzend an die erhöhte Plattform (1) angeordnet werden können, umfassend:
- eine Vielzahl von nebeneinanderliegenden tragenden Elementen (3), die eine erhöhte horizontale Ebene (48) bilden, wobei die tragenden Elemente aus zwei vertikalen Stützen (12), die dazu bestimmt sind, auf einer Oberfläche (8) aufzuliegen, und einem horizontalen oberen Querträger (13) bestehen,
- eine Vielzahl von Zufahrtselementen (4), die wenigstens eine durchgehende geneigte Ebene ausgehend von der Auflagefläche (8) bis zu der erhöhten horizontalen Ebene (48) bilden, wobei die Zufahrtselemente aus zwei auf der Auflagefläche (8) aufliegenden vertikalen Stützen (12) und einem geneigten oberen Querträger (13) bestehen, und
- Befestigungsmittel (17) zwischen den tragenden Elementen (3) und den Zufahrtselementen (4), wobei die tragenden Elemente (3) und die Zufahrtselemente (4) modulare Elemente bilden, welche die Form eines umgekehrten U aufweisen, wobei die Äste des U die Breite des betreffenden modularen Elements ergeben,
**dadurch gekennzeichnet, dass** Durchgangsmittel (60) mit einem oder mehreren angelenkten Flügeln, die den Zugang zu der ebenerdigen Zone mit dem Boden erlauben, die sich unter der Plattform befindet und vorab abgetrennt wurde, im Bereich von wenigstens einem modularen Element angeordnet sind.

2. Vorrichtung nach Anspruch 1, ***dadurch gekennzeichnet, dass*** die Abmessungen der modularen Elemente innerhalb der Grenze von Modulen variieren, die eine Höhe unter 4 Metern, eine Länge unter 10 Metern und eine Breite unter 6 Metern aufweisen.

3. Vorrichtung nach einem der vorhergehenden Ansprüche, ***dadurch gekennzeichnet, dass*** sie Mittel (16) umfasst, um zwei aufeinanderfolgende Elemente (3, 4) aneinander zu befestigen.

4. Vorrichtung nach Anspruch 3, ***dadurch gekennzeichnet, dass*** die Befestigungsmittel (16) wenigstens ein System (17) umfassen, das aus zwei starren Klauen (23, 24) gebildet ist, die an ihren Enden (25, 26) durch zwei Gewindestäbe (27, 28) miteinander verbunden sind, die jeweils eine vertikale Stütze (12) von zwei aufeinanderfolgenden Elementen (3, 4) durchqueren.

5. Vorrichtung nach einem der vorhergehenden Ansprüche, ***dadurch gekennzeichnet, dass*** sie Befestigungsmittel (16) umfasst, um vier Elemente (3, 4) aneinander zu befestigen, wobei die Elemente in Form eines ersten Paares von aufeinanderfolgenden Elementen angeordnet sind, das an ein zweites Paar von aufeinanderfolgenden Elementen anschließt.

6. Vorrichtung nach Anspruch 5, ***dadurch gekennzeichnet, dass*** die Befestigungsmittel (16) wenigstens ein System (17) umfassen, das aus zwei starren Klauen (23, 24) gebildet ist, die an ihren Enden (25, 26) durch zwei Gewindestäbe (27, 28) miteinander verbunden sind, die jeweils zwei aneinander anschließende vertikale Stützen (12) von zwei aufeinanderfolgenden Elementen (3, 4) durchqueren.

7. Vorrichtung nach einem der vorhergehenden Ansprüche, ***dadurch gekennzeichnet, dass*** sie ein Geländer (6) am Umfang der Plattform umfasst.

8. Vorrichtung nach Anspruch 7, ***dadurch gekennzeichnet, dass*** die Geländer unter Zwischenstellung anderer Befestigungsmittel (65) auf den tragenden Elementen (3) und Zufahrtselementen (4), vorzugsweise senkrecht über den äußeren vertikalen Stützen (12) der Plattform, positioniert sind.

9. Vorrichtung nach einem der vorhergehenden Ansprüche, ***dadurch gekennzeichnet, dass*** die tragenden Elemente (3) und die Zufahrtselemente (4) aus Beton vorgefertigt sind.

10. Vorrichtung nach dem vorhergehenden Anspruch, ***dadurch gekennzeichnet, dass*** wenigstens ein horizontaler oberer Querträger (13) der modularen Elemente Mittel zum Heizen der Plattform umfasst.

11. Vorrichtung nach einem der vorhergehenden Ansprüche, ***dadurch gekennzeichnet, dass*** Dichtungen (66) an der Oberfläche der tragenden Elemente (3) und der Zufahrtselemente (4) im Bereich der Grenzen zwischen jedem modularen Element platziert sind.

12. Vorrichtung nach einem der vorhergehenden Ansprüche, ***dadurch gekennzeichnet, dass*** Pressbänder (67) aus elastischem Material zwischen den Wänden der modularen Elemente im Bereich der Kontaktzonen der vertikalen Stützen (12) platziert sind.

13. Vorrichtung nach einem der vorhergehenden Ansprüche, ***dadurch gekennzeichnet, dass*** Pressbänder (67) aus elastischem Material im Bereich der Kontaktzone zwischen den vertikalen Stützen (12) der modularen Elemente und der Auflagefläche (8) platziert sind.

## Claims

1. A device designed for the unloading of waste, which device consists of a raised platform (1) and of inclined access ramps (2), wherein skips (5) serving as receptacles for the waste can be placed on the ground next to the raised platform (1), the device comprising:
- a plurality of juxtaposed supporting elements (3) forming a raised horizontal surface (48), said supporting elements consisting of two vertical uprights (12) designed for resting on a surface (8) and of a horizontal top cross member (13),
- a plurality of access elements (4) forming at least one continuous inclined surface from the bearing surface (8) to the raised horizontal surface (48), said access elements consisting of two vertical uprights (12) resting on the bearing surface (8) and of an inclined top cross member (13), and
- fastening means (17) between the supporting elements (3) and the access elements (4), the supporting elements (3) and the access elements (4) forming modular elements having the shape of an inverted U, the branches of the U giving the width of the modular element in question,
**characterised in that** entrance means (60) with one or more articulated opening elements allowing access into the ground-level zone situated under the platform and previously partitioned are arranged on at least one modular element.

2. The device as claimed in claim 1, **characterised in that** the dimensions of the modular elements vary within the limit of modules having a height of less than 4 meters, a length of less than 10 meters and a width of less than 6 meters.

3. The device as claimed in one of the preceding claims, **characterised in that** it comprises fastening means (16) for fastening two consecutive elements (3, 4) together.

4. The device as claimed in claim 3, **characterised in that** the fastening means (16) comprise at least one system (17) consisting of two rigid gusset plates (23, 24) fastened together at their ends (25, 26) by two threaded rods (27, 28) each passing through a vertical upright (12) of two consecutive elements (3, 4).

5. The device as claimed in one of the preceding claims, **characterised in that** it comprises fastening means (16) for fastening four elements (3, 4) together, said elements being placed in a first pair of consecutive elements placed adjacent to a second pair of consecutive elements.

6. The device as claimed in claim 5, **characterised in that** the fastening means (16) comprise at least one system (17) consisting of two rigid gusset plates (23, 24) fastened together at their ends (25, 26) by two threaded rods (27, 28) each passing through two adjacently placed vertical uprights (12) of two pairs of consecutive elements (3, 4).

7. The device as claimed in one of the preceding claims, **characterised in that** it comprises a safety rail (6) on the periphery of the platform.

8. The device as claimed in claim 7, **characterised in that** said safety rails are positioned on the supporting elements (3) and access elements (4), preferably level with the outer vertical uprights (12) of the platform, by means of other fastening means (65).

9. The device as claimed in any one of the preceding claims, **characterised in that** the supporting elements (3) and the access elements (4) are prefabricated in concrete.

10. The device as claimed in the preceding claim, **characterised in that** at least one horizontal top cross member (13) of the modular elements comprises means for heating the platform.

11. The device as claimed in any one of the preceding claims, **characterised in that** seals (66) are placed on the surface of the supporting elements (3) and of the access elements (4) at the juxtapositions of each modular element.

12. The device as claimed in any one of the preceding claims, **characterized in that** compression strips (67) made of resilient material are placed between the walls of the modular elements, at the contact zones of the vertical uprights (12).

13. The device as claimed in any one of the preceding claims, **characterized in that** the compression strips (67) made of resilient material are placed at the contact zone between the vertical uprights (12) of the modular elements and the bearing surface (8).
